# FASCICULE DE BREVET EUROPEEN

(11) **EP 1 572 348 B1**
(45) Date de publication et mention de la délivrance du brevet: **06.02.2008**
(21) Numéro de dépôt: 03809992.5
(22) Date de dépôt: 16.12.2003
(51) Int. Cl.: B01J 19/00, B01L 3/00

(54) **PROCEDE ET DISPOSITIF DE CONFINEMENT D UN LIQUIDE**
VERFAHREN UND VORRICHTUNG ZUM EINSCHLUSS EINER FLÜSSIGKEIT
METHOD AND DEVICE FOR CONFINEMENT OF A LIQUID

(30) Priorité: 17.12.2002 FR 0215979
(43) Date de publication de la demande: 14.09.2005
(73) Titulaire: COMMISSARIAT A L'ENERGIE ATOMIQUE, 75015 Paris (FR)
(72) Inventeur: DIVOUX, Claire, F-38000 Grenoble (FR); ORTIZ, Laurent, F-38130 Echirolles (FR)
(74) Mandataire: Poulin, Gérard
(86) Numéro de dépôt international: PCT/FR2003/050180
(87) Numéro de publication internationale: WO 2004/057405

(56) Documents cités:
- WO-A-01/07161
- WO-A-02/41996
- WO-A-02/058846
- FR-A- 2 817 974

## Description

### DOMAINE TECHNIQUE

La présente invention concerne un procédé de confinement d'un liquide.

Elle s'applique notamment
- aux actionneurs pneumatiques et aux actionneurs optiques,
- aux actionneurs fluidiques par électrocapillarité ou thermocapillarité et, plus généralement,
- à tout actionneur ou capteur qui utilise un liquide, soit comme moteur, soit comme transducteur, soit comme milieu actif ou ambiant.

En particulier, l'invention s'applique aux actionneurs ou aux capteurs qui sont destinés à contenir un liquide. Elle s'applique aussi au dosage ou au conditionnement d'un liquide, plus particulièrement dans le cas où la limitation de la localisation de ce liquide est nécessaire.

L'invention s'applique par exemple à la fabrication d'un micro-actionneur du genre de celui qui est connu par le document suivant :
[1] WO 02/48777 A, publié le 20 juin 2002, « Micro-actionneur optique, composant optique utilisant le micro-actionneur, et procédé de réalisation d'un micro-actionneur optique », invention de Claire Divoux et Claude Chabrol.

Indiquons dès maintenant que, dans le cas d'une application à un commutateur optique de ce genre, l'invention permet de réduire l'accès au réservoir du commutateur, qui permet la commutation et qui, parmi les parties du commutateur où la lumière n'est pas guidée, est celle dans laquelle la perte de flux lumineux est habituellement la plus forte.

### ETAT DE LA TECHNIQUE ANTERIEURE

Dans le domaine de la biologie, il est connu d'utiliser des dispositifs d'analyse comportant des cavités qui sont destinées à contenir un liquide. Afin de bien maintenir ce liquide dans chaque cavité, on_met en oeuvre un traitement de surface autour de ces cavités et dans celles-ci.

Le remplissage des cavités est effectué de manière individuelle, au moyen d'un micro-dispenseur. Ainsi, le remplissage n'est pas collectif et sa durée dépend du nombre de micro-dispenseurs qui sont disponibles ainsi que du nombre de cavités à remplir.

Il convient en outre de noter qu'un micro-dispenseur n'est pas adapté au remplissage précis de petites cavités ni à l'obtention d'un niveau précis de liquide. De ce fait, il est inutilisable pour remplir un actionneur optique dont le fonctionnement dépend sensiblement du niveau d'un ménisque.

### EXPOSÉ DE L'INVENTION

La présente invention a pour but de remédier aux inconvénients précédents.

Elle résout le problème du remplissage automatique et collectif, par un liquide, de cavités formées sur un substrat et, plus généralement, le problème du confinement automatique et collectif d'un liquide dans des zones formées sur un substrat.

L'invention vise en outre à :
- régler, de façon automatique, collective et homogène, les volumes et les niveaux d'un liquide dans des cavités formées sur un substrat,
- homogénéiser les volumes et les niveaux d'un liquide entre de telles cavités,
- maîtriser de façon précise le volume et le niveau d'un liquide dans ces cavités, et
- maintenir à une position stable le niveau d'un liquide dans ces cavités.

En particulier, dans le cas d'une matrice de commutation optique, comprenant un grand nombre de commutateurs optiques, par exemple du genre de celui qui est divulgué par le document [1], l'invention permet de remplir les petits volumes des réservoirs que comportent ces commutateurs, non seulement de façon collective mais aussi avec précision, ce qui est primordial.

L'invention utilise de brusques variations de l'état de la surface d'un substrat, au niveau des contours de zones de cette surface, en lesquelles on veut confiner un liquide.

WO 02 41996A décrit un dispositif microfluidique comprenant un conduit qui débouche à la surface d'un substrat, dans une zone autour de laquelle est formé un anneau en matériau hydrophobe.

De façon précise, la présente invention a pour objet un procédé de confinement d'un liquide dans au moins une zone d'un substrat, conformément à la revendication 1.

Selon un mode de mise en oeuvre préféré du procédé objet de l'invention, on crée en outre des rugosités sur la zone ou sur l'environnement de cette zone ou sur les deux.

Selon un premier mode de mise en oeuvre particulier du procédé objet de l'invention, on remplit la cavité en immergeant le substrat dans le liquide, en abaissant ensuite la pression au-dessus du liquide, depuis la pression atmosphérique jusqu'à une pression inférieure à la pression de vapeur saturante de ce liquide, en rétablissant ensuite la pression atmosphérique puis en retirant le substrat du liquide.

Selon un deuxième mode de mise en oeuvre particulier du procédé objet de l'invention, on remplit la cavité en plaçant le substrat dans une enceinte à vide, en faisant ensuite le vide dans cette enceinte, en injectant ensuite le liquide dans l'enceinte, jusqu'à l'immersion totale du substrat, en rétablissant ensuite la pression atmosphérique dans l'enceinte puis en retirant le substrat du liquide.

Dans l'invention, le traitement de surface appliqué peut être apte à rendre la zone à la fois lipophobe et hydrophobe.

Dans ce cas, le traitement de surface peut comprendre le dépôt d'une couche de polytétrafluoréthylène sur cette zone.

Le liquide peut comprendre une huile et l'on peut alors appliquer à la zone un traitement apte à rendre celle-ci lipophile.

Inversement, le liquide peut comprendre de l'eau et l'on peut alors appliquer à la zone un traitement apte à rendre celle-ci hydrophile.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :
- les figures 1A à 1F illustrent schématiquement des étapes d'un premier mode de mise en oeuvre particulier du procédé objet de l'invention,
- les figures 2A à 2F illustrent schématiquement des étapes d'un deuxième mode de mise en oeuvre particulier du procédé objet de l'invention,
- les figures 3A à 3E illustrent schématiquement un premier exemple de remplissage d'un dispositif comportant des cavités, conformément à l'invention,
- les figures 4A à 4D illustrent schématiquement un deuxième exemple de remplissage d'un dispositif comportant des cavités, conformément à l'invention, et
- la figure 5 illustre schématiquement le réglage du niveau du liquide dans ces cavités, conformément à l'invention.

### EXPOSÉ DÉTAILLÉ DE MODES DE RÉALISATION PARTICULIERS

On décrit maintenant un premier exemple du procédé objet de l'invention.

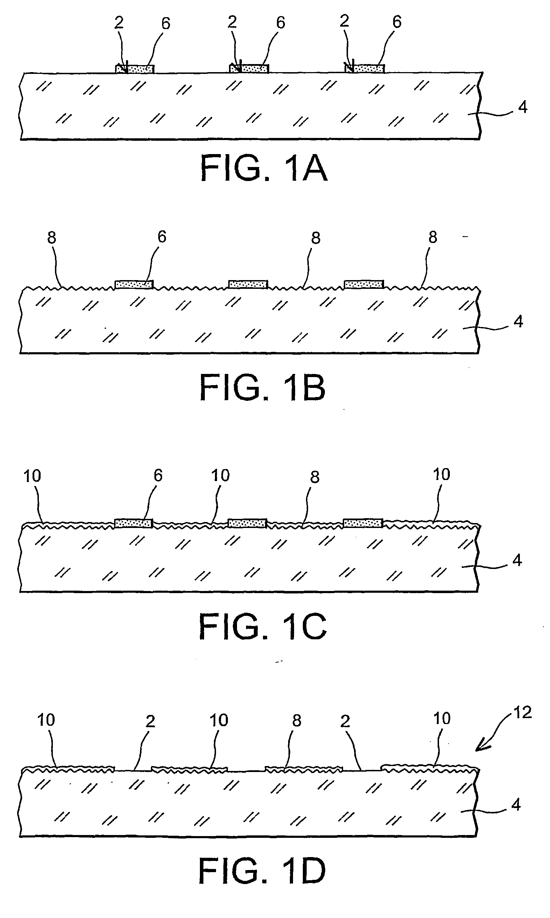

Dans ce premier exemple, on veut confiner une huile, par exemple une huile optique (huile à indice optique déterminé), dans des zones 2 d'un substrat hydrophobe 4, par exemple en silicium (figure 1A).

Pour ce faire, on forme une couche 6 de résine photo-sensible sur chacune de ces zones. Ensuite, sur l'environnement de ces zones, on forme une couche d'un matériau lipophobe.

Cependant, auparavant, afin d'accentuer le caractère lipophobe de cet environnement, il est préférable de former sur ce dernier des rugosités 8 (figure 1B) dont la taille est par exemple de l'ordre de 1µm et que l'on appelle alors des micro-rugosités.

Pour former ces micro-rugosités, on procède de la façon suivante: les micro-rugosités peuvent être obtenues grâce à la gravure du silicium à travers un oxyde natif non homogène. On forme ainsi des micro-rugosités grâce à la sélectivité de gravure entre le silicium et l'oxyde de silicium.

Après avoir obtenu ces micro-rugosités 8, on forme la couche 10 de matériau lipophobe, sur l'environnement des zones 2 (figure 1C). Ce matériau est par exemple du polytétrafluoréthylène et, pour former la couche 10, on procède par un dépôt.

On élimine ensuite la résine photo-sensible déposée, ce qui fait apparaître la surface de substrat de silicium au niveau des zones 6 (figure 1D).

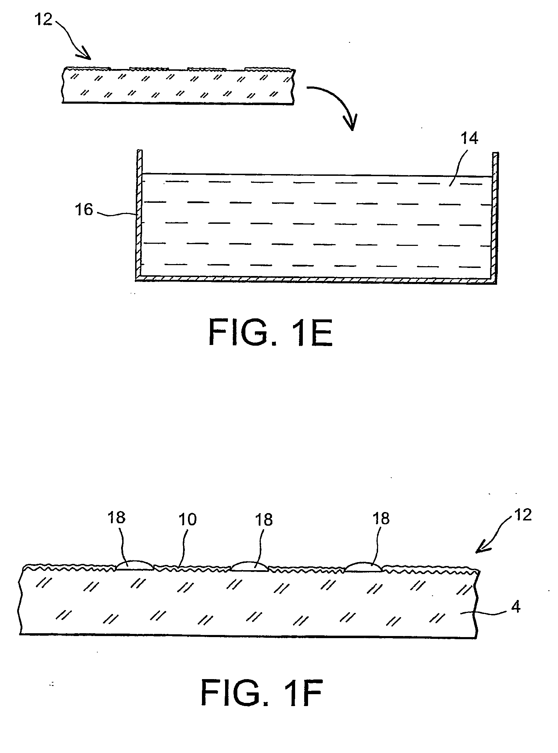

On immerge ensuite le substrat 12 ainsi obtenu dans l'huile 14 ou l'eau contenue dans un récipient 16 (figure 1E). L'huile ou l'eau adhère ainsi aux zones. Puis on retire le substrat du récipient.

On obtient ainsi des gouttes d'huile 18 confinées dans les zones considérées, l'environnement de ces zones n'étant pas recouvert par cette huile (figure 1F).

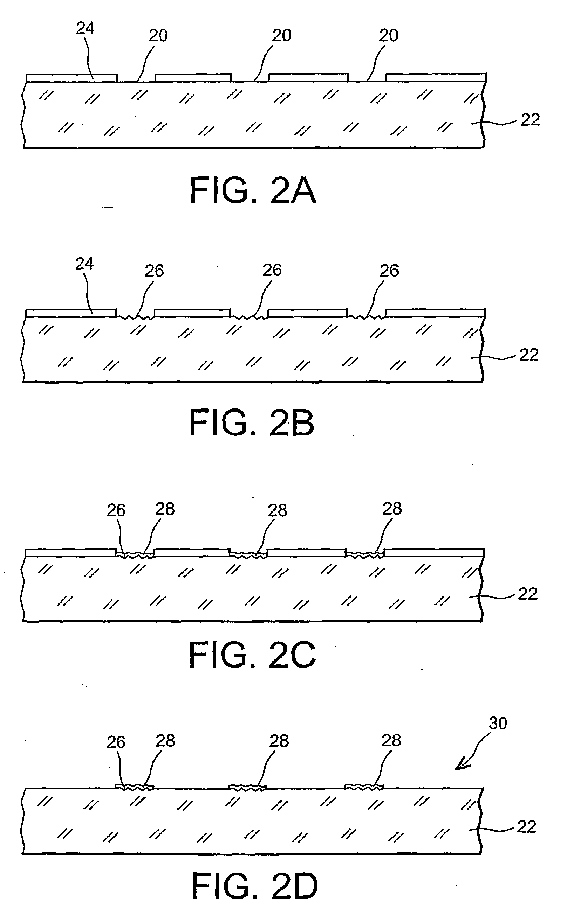

Dans un deuxième exemple, on souhaite confiner une huile dans des zones 20 d'un substrat hydrophile 22, par exemple en silice (figure 2A).

Pour ce faire, on commence par former une couche 24 de résine photosensible sur l'environnement des zones. Ensuite, on effectue un traitement de la surface du substrat, permettant de rendre les zones lipophiles.

Cependant, afin d'accentuer le caractère lipophile de ces zones, il est préférable de former auparavant des micro-rugosités 26 sur ces zones (figure - 2B).

Ensuite, on forme une couche 28 d'un matériau lipophile, par exemple le polytétrafluoréthylène, sur chacune des zones 20 (figure 2C).

Pour ce faire, on procède par dépôt.

On élimine ensuite la résine photosensible (figure 2D).

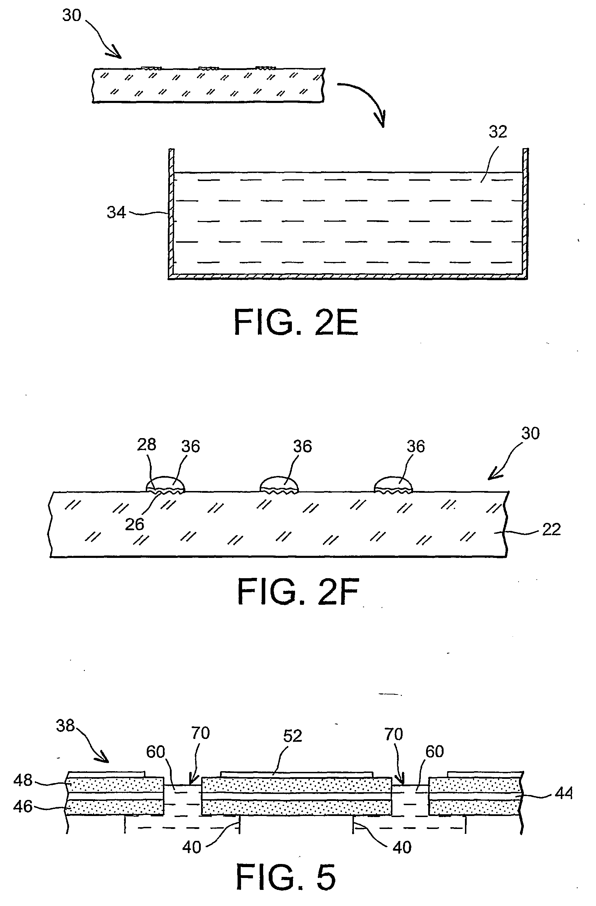

On immerge ensuite le substrat 30 ainsi obtenu dans l'huile 32 contenue dans un récipient 34 (figure 2E). L'huile adhère ainsi aux zones ayant subi le traitement lipophile. Puis on retire le substrat du récipient.

On obtient ainsi des gouttes d'huile 36 confinées dans les zones considérées, l'environnement de ces zones n'étant pas recouvert d'huile (figure 2F).

Dans un troisième exemple, on souhaite confiner de l'eau sur un substrat en silicium.

Pour ce faire, on procède comme on l'a expliqué dans la description des figures 2A à 2F, en remplaçant le substrat en silice par ce substrat en silicium, l'huile par l'eau et le traitement lipophile par un traitement hydrophile, par exemple à base d'un métal, tel que l'or ou l'argent.

Ce traitement hydrophile est par exemple effectué par un procédé de dépôt en évaporation.

Dans une variante du procédé décrit en faisant référence aux figures 1A à 1F, on peut initialement former des micro-rugosités sur toute la surface du substrat 4 en silicium, et former ensuite le dépôt de résine photosensible sur chacune des zones 2, puis la couche lipophobe 10 sur l'environnement de ces zones. On élimine ensuite la résine photosensible puis on immerge le substrat dans l'huile et on l'en retire.

L'existence des micro-rugosités sur les zones 2 permet alors de renforcer le caractère lipophile de ces zones.

De même, dans le cas du procédé décrit en faisant référence aux figures 2A à 2F, on peut initialement former des micro-rugosités sur toute la surface du substrat 22, puis former la couche de résine photosensible 24 puis les couches 28.

L'existence de micro-rugosités, sur l'environnement des zones 20 permet de renforcer le caractère lipophobe de cet environnement.

Dans un autre exemple de l'invention (non illustré par des figures), on effectue un traitement de surface d'un substrat, par exemple en polytétrafluoréthylène, pour rendre des zones de ce substrat à la fois lipophobes et hydrophobes. Pour ce faire, on peut former sur ces zones un dépôt de polytétrafluoréthylène par la méthode de dépôt.

Il convient de noter que le polytétrafluoréthylène a une lipophobie et une hydrophobie supérieures à celles que l'on obtient par tout autre traitement de surface.

On dispose ainsi d'un substrat pourvu de zones sur lesquelles on peut choisir de déposer un liquide hydrophile ou, au contraire, un liquide hydrophobe, ce choix pouvant être reculé jusqu'au dernier moment.

On décrit maintenant un procédé conforme à l'invention, permettant de remplir d'un liquide plusieurs cavités dont est pourvu un substrat, chaque cavité comportant une seule ouverture qui sert d'entrée pour le liquide.

Dans l'exemple représenté, ce substrat est un micro-actionneur optique du genre de celui qui est décrit dans le document [1] mentionné plus haut.

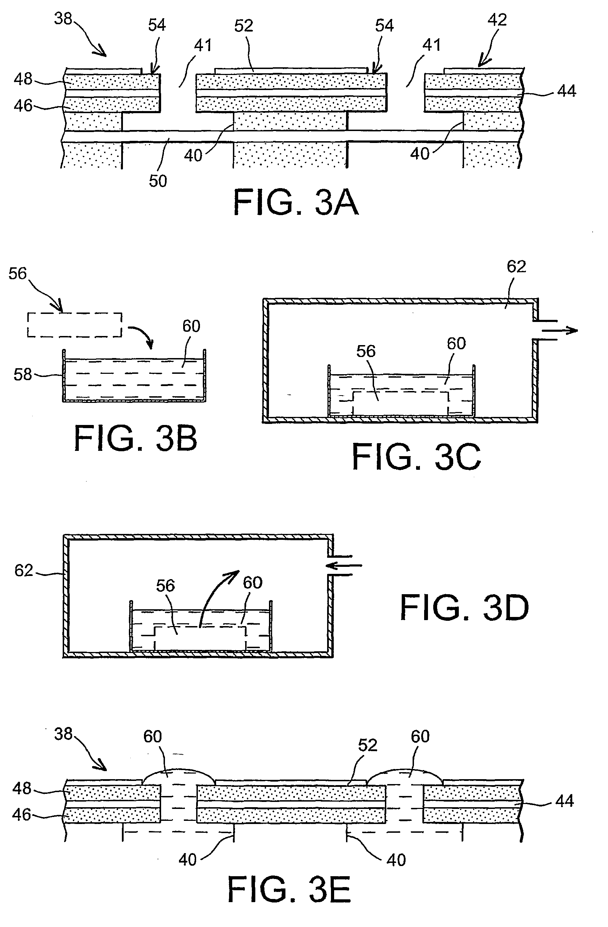

Sur la figure 3A, on a représenté de façon schématique et partielle ce micro-actionneur optique 38 pourvu de plusieurs cavités ou réservoirs 40. Ces cavités sont formées comme on l'explique dans le document [1]. Elles sont délimitées par un guide optique 42, dont on voit le coeur 44, la couche de confinement inférieure 46 et la couche de confinement supérieure 48, et par des membranes 50. On voit aussi que chaque cavité 40 comporte une seule ouverture 41, chaque ouverture définissant un intervalle (en anglais "gap") optique.

Le liquide utilisé est un liquide optique qui peut être une huile optique, par exemple le carbonate de propylène.

Le guide optique 42 est en silice.

On commence par former, à la surface de la couche de confinement supérieure 48, une couche 52 en matière lipophobe, par exemple du polytétrafluoréthylène, par la technique de dépôt.

Cette couche 52 est formée sur la surface de la couche de confinement supérieure 48, sauf au niveau de zones 54 où débouchent les cavités 40 : sur la figure 3A, on voit que la couche 52 s'arrête à une certaine distance, par exemple de l'ordre de 10µm, de chaque cavité 40.

En vue de remplir d'huile optique chacune des cavités 40, on place le dispositif 56 ainsi obtenu dans un récipient 58 contenant l'huile optique 60 (figure 3B).

On place ensuite ce récipient dans une enceinte à vide 62 (figure 3C), on ferme cette enceinte 62, et l'on abaisse la pression dans celle-ci depuis la pression atmosphérique jusqu'à une pression inférieure à la pression de vapeur saturante de l'huile utilisée. Cette huile remplit alors les cavités 40.

Aucune bulle d'air ne reste coincée dans les cavités.

On rétablit alors la pression atmosphérique dans l'enceinte 62 puis on retire le dispositif 56 du liquide (figure 3D).

On obtient ainsi le micro-actionneur 38 dont les cavités 40, y compris les ouvertures 41 de celles-ci, sont remplies d'huile optique, comme on le voit sur la figure 3E.

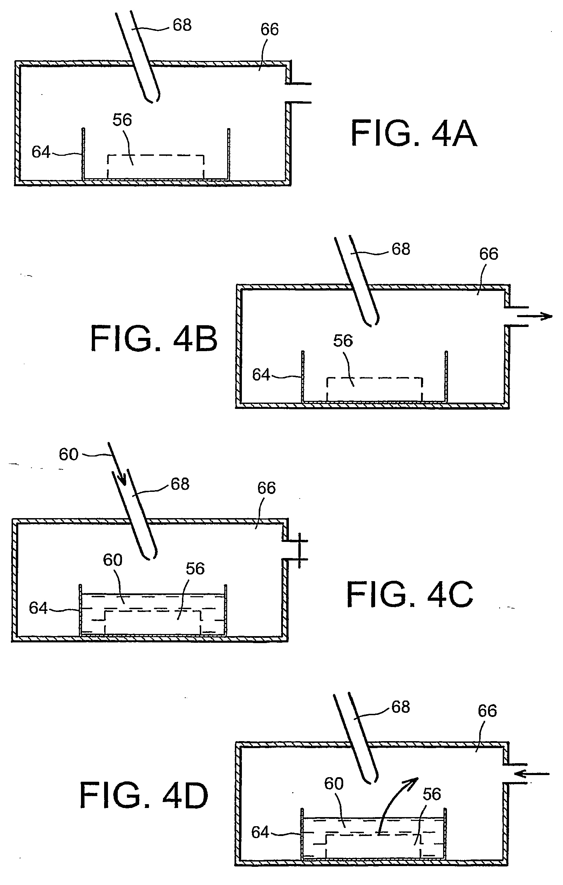

Dans une variante schématiquement illustrée par les figures 4A à 4D, on place le dispositif 56, dont il a été question plus haut, dans un récipient 64 (figure 4A), on place ce récipient dans une enceinte à vide 66 et l'on fait le vide dans cette enceinte 66 (figure 4B).

On injecte ensuite l'huile optique 60 dans le récipient 64, avec des moyens appropriés 68, par exemple par une seringue, jusqu'à l'immersion totale du dispositif 56 (figure 4C).

L'huile remplit alors les cavités 40. Aucune bulle d'air ne reste coincée dans les cavités.

On rétablit ensuite la pression atmosphérique dans l'enceinte et l'on retire le dispositif 56 de l'huile (figure 4D).

On obtient encore le micro-actionneur 38 de la figure 3E, dont les cavités 40 sont remplies d'huile optique 60.

Dans ce cas, comme dans le cas de la figure 3E, la partie de l'huile optique qui dépasse de chaque cavité peut être éliminée par une simple action de la pesanteur ou sous l'effet de vibrations.

Pour des raisons techniques, il est possible que le traitement de surface, conduisant à une variation brusque de l'état de surface du substrat dans le plan de ce dernier, ne puisse être localisé à l'endroit souhaité pour le niveau du liquide.

Dans ce cas, le niveau initialement obtenu, s'il n'est pas celui que l'on souhaite, peut être ramené au niveau souhaité, ou niveau fonctionnel, par exemple par évaporation.

Ceci est schématiquement illustré par la figure 5 où l'on voit que le niveau initialement obtenu pour l'huile optique 60, dans le cas de la figure 3E, a été ramené au niveau souhaité 70 par évaporation.

Cette évaporation s'effectue de façon homogène d'une cavité à l'autre.

On précise que les liquides optiques classiquement utilisés sont des huiles, par exemple le carbonate de propylène, ou des liquides qui ont un faible angle de mouillage, inférieur à 30°, sur la plupart des surfaces, telles que les surfaces en silicium, en silice, en verre ou en parylène.

Comme on vient de le voir dans les exemples qui précèdent, l'invention permet de confiner un liquide, en particulier un liquide optique, dans une ou plusieurs cavités et de maintenir ce liquide dans l'ouverture de chaque cavité. En outre, l'invention permet de maîtriser (en anglais "control") le niveau du liquide dans les cavités et de remplir ces cavités de façon collective et précise.

## Revendications

1. Procédé de confinement d'un liquide (14, 32, 60) dans au moins une zone (2, 20) d'un substrat (4, 22, 56), ce procédé étant **caractérisé en ce que**:
- on applique à la surface de ce substrat un traitement apte à créer, sur cette surface, au moins une zone (2, 20) dont l'aptitude à être mouillée par le liquide est supérieure à celle de l'environnement de cette zone sur la surface,
- on immerge le substrat dans le liquide (14, 32, 60), et
- on retire ce substrat du liquide,
procédé dans lequel on forme en outre dans la zone, avant l'application du traitement à la surface du substrat, une cavité (40) destinée à contenir le liquide, cette cavité comportant une seule ouverture (41).

2. Procédé selon la revendication 1, dans lequel on crée en outre des rugosités (8, 26) sur la zone ou sur l'environnement de cette zone ou sur les deux.

3. Procédé selon l'une quelconque des revendications 1 et 2, dans lequel on remplit la cavité (40) en immergeant le substrat (56) dans le liquide (60), en abaissant ensuite la pression au-dessus du liquide, depuis la pression atmosphérique jusqu'à une pression inférieure à la pression de vapeur saturante de ce liquide, en rétablissant ensuite la pression atmosphérique puis en retirant le substrat du liquide.

4. Procédé selon l'une quelconque des revendications 1 et 2, dans lequel on remplit la cavité (40) en plaçant le substrat (56) dans une enceinte à vide (66), en faisant ensuite le vide dans cette enceinte, en injectant ensuite le liquide (60) dans l'enceinte, jusqu'à l'immersion totale du substrat, en rétablissant ensuite la pression atmosphérique dans l'enceinte puis en retirant le substrat du liquide.

5. Procédé selon l'une quelconque des revendications 1 à 4, dans lequel le traitement de surface appliqué est apte à rendre la zone à la fois lipophobe et hydrophobe.

6. Procédé selon la revendication 5, dans lequel ce traitement de surface comprend le dépôt d'une couche de polytétrafluoréthylène sur cette zone.

7. Procédé selon l'une quelconque des revendications 1 à 6, dans lequel le liquide comprend une huile (14) et l'on applique à la zone un traitement apte à rendre celle-ci lipophile.

8. Procédé selon l'une quelconque des revendications 1 à 6, dans lequel le liquide comprend de l'eau et l'on applique à la zone un traitement apte à rendre celle-ci hydrophile.

## Claims

1. A method for confining a liquid (14, 32, 60) in at least one area (2, 20) of a substrate (4, 22, 56), this method been **characterized in that**:
- a treatment is applied to the surface of this substrate, capable of creating on this surface, at least one area (2, 20), the wettability of which by the liquid is larger than that of the surroundings of this area on the surface,
- the substrate is immersed in the liquid (14, 32, 60), and
- this substrate is removed from the liquid,
wherein, before applying the treatment to the surface of the substrate, a cavity (40) intended to contain the liquid is further formed in the area, this cavity including a single aperture (41).

2. The method according to claim 1, wherein rough features (8, 26) are further created on the area or on the surroundings of this area or on both of them.

3. The method according to any of claims 1 and 2, wherein the cavity (40) is filled by immersing the substrate (56) in the liquid (60), then by lowering the pressure above the liquid from atmospheric pressure to a pressure less than the saturation vapor pressure of this liquid, subsequently by re-establishing the atmospheric pressure and then by removing the substrate from the liquid.

4. The method according to any of claims 1 and 2, wherein the cavity (40) is filled by placing the substrate (56) in a vacuum chamber (66), then applying vacuum in this chamber, subsequently by injecting the liquid (60) into the chamber, up to a total immersion of the substrate, then by re-establishing atmospheric pressure in the chamber and then removing the substrate from the liquid.

5. The method according to any of claims 1 to 4, wherein the applied surface treatment is capable of making the area both lipophobic and hydrophobic.

6. The method according to claim 5, wherein this surface treatment comprises the deposition of a polytetrafluoroethylene layer on this area.

7. The method according to any of claims 1 to 6, wherein the liquid comprises oil (14) and a treatment is applied to the area, capable of making the latter lipophilic.

8. The method according to any of claims 1 to 6, wherein the liquid comprises water and a treatment is applied to the area, capable of making the latter hydrophilic.

## Patentansprüche

1. Verfahren zum Einschluss einer Flüssigkeit (14, 32, 60) in wenigstens eine Zone (2, 20) eines Substrats (4, 22, 56),
**dadurch gekennzeichnet, dass:**
- man auf die Oberfläche dieses Substrats ein Verfahren anwendet, das auf dieser Oberfläche wenigstens eine Zone (2, 20) erzeugt, deren Benetzbarkeit durch die Flüssigkeit größer ist als die der Umgebung dieser Zone auf der Oberfläche,
- man das Substrat in die Flüssigkeit (14, 32, 60) eintaucht, und
- man dieses Substrat aus der Flüssigkeit herausnimmt,
wobei man in diesem Verfahren vor der Anwendung der Behandlung auf die Oberfläche des Substrats außerdem in der Zone einen Hohlraum (40) ausbildet, der dazu bestimmt ist, die Flüssigkeit zu enthalten, und dieser Hohlraum eine einzige Öffnung (41) hat.

2. Verfahren nach Anspruch 1, bei dem man außerdem in der Zone oder in der Umgebung dieser Zone oder in allen beiden Rauhigkeiten (8, 26) erzeugt.

3. Verfahren nach einem der Ansprüche 1 und 2, bei dem man den Hohlraum (40) füllt, indem man das Substrat (56) in die Flüssigkeit (60) eintaucht, man anschließend den Druck über der Flüssigkeit absenkt, vom atmosphärischen Druck bis auf einen Druck unterhalb des Sättigungsdampfdrucks dieser Flüssigkeit, man anschließend den atmosphärischen Druck wiederherstellt, dann das Substrat aus der Flüssigkeit herausnimmt.

4. Verfahren nach einem der Ansprüche 1 und 2, bei dem man den Hohlraum (40) füllt, indem man das Substrat (56) in einen Vakuumbehälter (66) gibt, anschließend in diesem Behälter ein Vakuum erzeugt, dann die Flüssigkeit (60) in den Behälter spritzt, solange bis das Substrat ganz untergetaucht ist, anschließend in dem Behälter den atmosphärischen Druck wiederherstellt, dann das Substrat aus der Flüssigkeit herausnimmt.

5. Verfahren nach einem der Ansprüche 1 bis 4, bei dem die angewandte Oberflächenbehandlung fähig ist, die Zone zugleich lipohob und hydrophob zu machen.

6. Verfahren nach Anspruch 5, bei dem diese Oberflächenbehandlung das Abscheiden einer Polytetrafluorethylen-Schicht auf dieser Zone umfasst.

7. Verfahren nach einem der Ansprüche 1 bis 6, bei dem die Flüssigkeit ein Öl (14) enthält und man auf die Zone eine Behandlung anwendet, die fähig ist, diese lipophil zu machen.

8. Verfahren nach einem der Ansprüche 1 bis 6, bei dem die Flüssigkeit Wasser enthält und man auf die Zone eine Behandlung anwendet, die fähig ist, diese hydrophil zu machen.
